# EUROPEAN PATENT SPECIFICATION

(11) **EP 1 069 294 B1**
(45) Date of publication and mention of the grant of the patent: **07.04.2004**
(21) Application number: 99307776.7
(22) Date of filing: 01.10.1999
(51) Int. Cl.: F02B 63/02, F02B 25/20

(54) **Two-stroke cycle engine**
Zweitaktbrennkraftmaschine
Moteur à combustion interne à deux temps

(30) Priority: 15.07.1999 JP 20106599
(43) Date of publication of application: 17.01.2001
(73) Proprietor: Maruyama MFG. Co., Inc., Tokyo (JP)
(72) Inventor: Nemoto, Toshihisa, Maruyama MFG. Co., Inc., Tougane-shi, Chiba-ken (JP); Yasuda, Terutaka, Maruyama MFG. Co., Inc., Tougane-shi, Chiba-ken (JP)
(74) Representative: Bayliss, Geoffrey Cyril

(56) References cited:
- US-A- 5 425 346
- US-A- 5 628 295

## Description

This invention relates to two-stroke cycle engines adapted for use of bush cutters, hedge trimmers, or the like, and more particularly, to a two stroke cycle engine which can achieve an improvement of combustion efficiency as well as reduction in total hydrocarbons in exhaust gas.

Such a two stroke cycle engine has been designed such that all the charging, scavenging and exhausting permit replacement of gases with high efficiency to provide a high power output. However, due to the fact that the scavenging and exhausting occur simultaneously, fuel mixture introduced through scavenging ports into a combustion chamber escapes into the exhaust port and this causes an increase in total hydrocarbons in the exhaust gas. In addition, after the fuel mixture has been burned in the combustion chamber, the burned gases are exhausted through the exhaust port with some unburned gas contained therein and this also causes an increase in total hydrocarbons in the exhaust gases. To reduce the total hydrocarbons in the exhaust gases, measures may, therefore, be adopted for preventing the fresh fuel mixture from escaping into the exhausting port and for increasing the combustion efficiency. Due to increase in combustion efficiency, total hydrocarbons in the exhaust gas can be reduced while improving the power output.

For purposes of preventing escape of the fuel mixture, scavenging flow of the gases has been improved by changes in positions and configurations of the scavenging and exhaust ports, and a shape of the combustion chamber has been modified to increase the combustion efficiency, but such improvements of the scavenging flow and the combustion efficiency have their limitations. It has also been proposed hitherto to make smaller an angle of rotation of the crankshaft through which the exhaust port opens, in order to decrease an amount of escaping fresh fuel mixture and slightly increase a residue of the burned gases in the combustion chamber to facilitate burning the fresh fuel mixture, thereby increasing the combustion efficiency. However, this results in a decrease in power output due to the exhaust efficiency being decreased. Since both the facts that the power output is increased due to the highly efficient replacement of gases and that the total hydrocarbons are decreased due to the prevention of escape of fresh fuel mixture into the exhaust port are inconsistent with each other, the improvement of the power output of the engine and the reduction in total hydrocarbons in the exhaust gases must be achieved in a balanced relation.

US-5628295 discloses a two-stroke engine having a cylinder, a piston mounted for reciprocating movement in the cylinder, and a crankcase chamber with inlet flow passages for fresh mixture which form a crankcase compression arrangement. The cylinder has a cylinder wall formed with intake and exhaust ports. Movement of the piston toward a bottom-dead-centre position opens the intake port and the exhaust port, and fresh mixture flows from the crankcase chamber into the cylinder and scavenges the burned gases through the exhaust port. When the piston moves toward the top-dead-centre position, the inlet flow passage is opened which allows fresh mixture to flow into the crankcase chamber. The exhaust port is also opened, and burned gases in the exhaust port are also drawn into the crankcase chamber and combined with the fresh mixture. The piston has two return passages formed in it extending in the circumferential direction through the piston skirt. Each of the return passages has one end opening to the exhaust duct and a second end opening to ducts leading to the crankcase when the piston is in the top dead centre position to communicate the exhaust port with the crankcase via the passages extending through the piston skirt.

The present invention relates to a two stroke cycle engine comprising a crank chamber in a crankcase into which a fuel mixture is supplied through feed means, a combustion chamber in a cylinder, scavenging ports in the cylinder for communication between the combustion chamber and the crank chamber, an exhaust port in the cylinder, a piston adapted to increase or decrease the volume of the combustion chamber as it reciprocates in the cylinder and open or close the scavenging ports and the exhaust port, and means for communicating the exhaust port with the crank chamber via the scavenging ports when the piston is in its pre-selected stroke position where the scavenging ports and the exhaust port are closed by the piston.

During movement of the piston from its top dead center toward its bottom dead center, the scavenging ports and the exhaust port are uncovered so that a fresh fuel mixture in the crank chamber chamber flows through the scavenging ports into the combustion chamber. The flow of the fuel mixture through the scavenging ports expels the burned gases from the combustion chamber into the exhaust port. The exhaust gases which leaves the cylinder, contain a portion of the fuel mixture passing from the scavenging ports through the combustion chamber into the exhaust port as it is and hydrocarbon remaining as the unburned gas. During movement of the piston toward the top dead center after it has passed through the bottom dead center the piston closes the scavenging ports and the exhaust port so that it compresses the fuel mixture in the combustion chamber. With the scavenging ports and exhaust port closed, as the piston reaches its pre-selected stroke position, the exhaust port communicates through the communication means with the scavenging ports and crank chamber so that a portion of the burned gases containing the hydrocarbon and remaining in the exhaust port is drawn through the scavenging ports into the crank chamber. As the piston reaches the top dead center, the fuel mixture in the combustion chamber is burned whereupon the presence of the portion of the burned gases in the fresh fuel mixture facilitates burning of the mixture in the combustion chamber to result in a increase in combustion efficiency. By circulating a portion of the burned gases from the exhaust port through the communication means into the crank chamber and from the latter into the combustion chamber, the two-stroke cycle engine provides an increased power output while reducing the total amount of hydrocarbon in the exhaust gases.

The exhaust port and crank chamber may be communicated with each other via the scavenging ports by the communication means when the piston reaches its top dead center. When the exhaust port and crank chamber are communicated with each other by the communication means, the portion of the burned gases in the exhaust port is smoothly drawn through the scavenging ports into the crank chamber under a vacuum which is created in the crank chamber by movement of the piston toward its top dead center. The portion of the burned gases which is drawn from the exhaust port through the communication means and the scavenging ports into the crank chamber, mostly remains in the scavenging ports. When the scavenging ports are opened, the burned gases remaining therein flow into the combustion chamber, prior to flow of the fuel mixture in the crank chamber flows into the combustion chamber. Thus, the initially escaping gases from the combustion chamber so that the amount of the fresh fuel mixture can be reduced.

It is an object of the present invention to reduce the total hydrocarbons in the exhaust.

This invention provides a two cycle stroke engine having a crank chamber in a crankcase into which a fuel mixture is supplied through feed means, a combustion chamber in a cylinder, scavenging ports in said cylinder for communication between said combustion chamber and said crank chamber, an exhaust port in said cylinder, a piston adapted to increase or decrease the volume of said combustion chamber as it reciprocates in said cylinder to open or close said scavenging ports and said exhaust port, and means for communicating said exhaust port with said crank chamber via said scavenging ports when said piston is in a pre-selected stroke position where said scavenging ports and said exhaust port are closed by said piston; wherein said communication means comprise passages in the form of channels formed in said piston on its outer surface and extending circumferentially of said piston between said exhaust port and said scavenging ports to establish communication therebetween when said piston reaches its top dead centre position.

In one arrangement according to the invention the communication means may comprise circumferentially extending channels formed in a piston on its outer cylindrical surface and in the inner wall of the cylinder, respectively, and adapted to open into the exhaust port and the scavenging ports, respectively. When the piston reaches its top dead center, the channels face each other to define continuous channels each opening into the exhaust port and the scavenging port.

In a further arrangement the communication means may also comprise passages in the form of circumferentially extending channels formed in a piston on its outer cylindrical surface and pipes connected at their one end to the scavenging ports and adapted to open into the channels when the piston reaches its top dead center.

In a still further arrangement, the exhaust port may be connected to a muffler having its space therein, and communicated through muffler space with the scavenging ports and hence the crank chamber by the communication means. Thus, the burned gases are taken into from the exhaust port through the muffler, communication means and scavenging ports and into the crank chamber. The communication means may comprise passages in the form of circumferentially extending channels formed in the piston on its outer surface and adapted to open into the scavenging ports and pipes connected at their one end to a muffler which is connected to the exhaust port, the pipes being positioned on the cylinder wall to establish communication between the channels and the inner space of the muffler when the piston reaches its top dead center.
Figure 1 is a vertical sectional view of the two-stroke cycle engine with a piston position at its top dead center;
Figure 2 is a vertical sectional view of the two-stroke cycle engine with the piston position at its bottom dead center;
Figure 3 is a cross-sectional view of the engine taken along line A-A of Figure 1;
Figures 4 through 6 are views similar to Figure 3 but showing further embodiments of the two -stroke cycle engine.

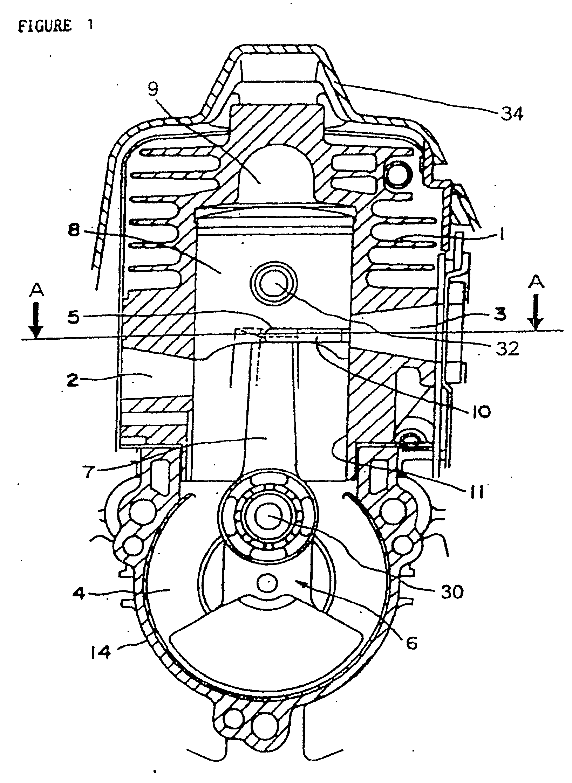

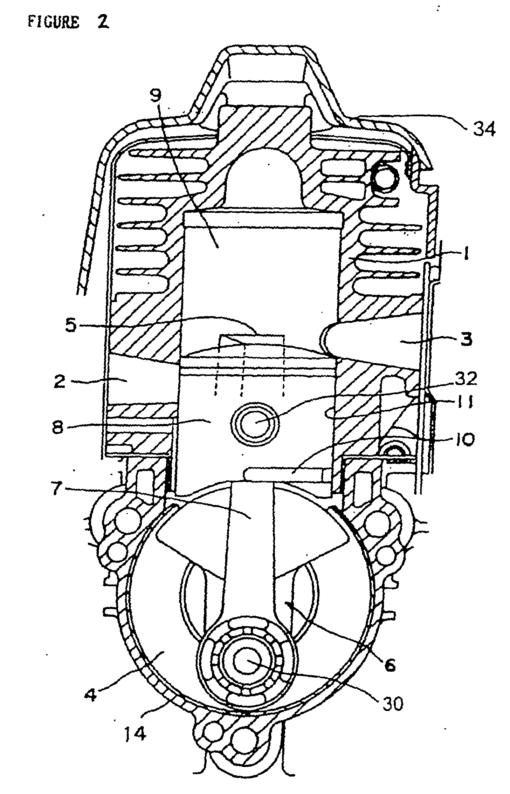

Referring to the drawings, and particularly, to Figures 1 and 2, a two-stroke cycle engine according to the present invention comprises a cylinder 1 and a crankcase 14 joined to each other. A crankshaft 6 is rotatively supported in the crankcase 14. A piston 8 is disposed for reciprocating movement within the bore 11 of the cylinder 1. A connecting rod 7 is rotatively connected at its one end to a crank-pin 30 of the crankshaft 6 and pivotably connected at its other end to the piston 8 by means of a piston-pin 32 so that the reciprocation of the piston 8 causes the crankshaft 6 to be rotated. A combustion chamber 9 is defined by the inner wall of the cylinder 1 and the top surface of the piston 8 while a crank chamber 4 or mixture chamber is defined by the inner wall of the crankcase 14 and the bottom surface of the piston 8. Upward or downward movement of the piston 8 causes a volume of the combustion chamber 9 to be increased or decreased, correspondingly, resulting in decrease or increase in volume of the crank chamber 4. A intake port 2 is formed in the wall of the cylinder 1 and adapted to receive a fuel mixture through feed means including a carburetor ( not shown ). As the piston 8 moves upward or downward, it is adapted to open or close the intake port 2, thereby permitting or blocking communication with the crank chamber 4. A exhaust port 3 which is adapted to connected to a muffler (not shown), are formed in the wall of the cylinder 1 in a position spaced circumferentially of the cylinder 1 through 180 degrees from the intake port 2, at a level above the intake port 2. As the piston 8 moves upward or downward, it is adapted to open or close the exhaust ports 3, thereby permitting or blocking communication with the combustion chamber 9. Scavenging ports 5 are formed in the wall of the cylinder 1 in positions spaced circumferentially of the cylinder 1 through 90 degrees from the exhaust port 3, at a level identical to that of the exhaust port 3 such that they establish communication between the combustion chamber 9 and the crank chamber 4. The scavenging ports 5 are also spaced apart circumferentially of the cylinder from each other through 180 degrees. A spark plug ( not shown ) is mounted adjacent the combustion chamber. There is provided a cover 34 surrounding the exterior of the cylinder 1.

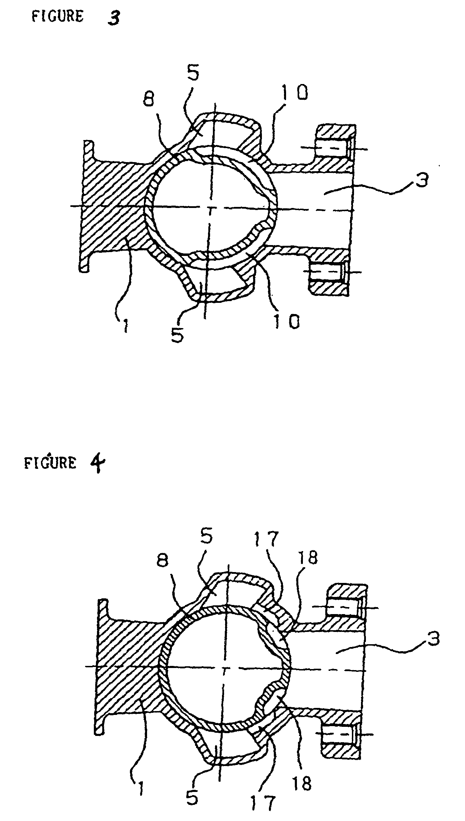

As can be seen in Figure 3, means are provided for communicating the exhaust port 3 with the crank chamber 4 via the scavenging ports 5 and comprise two passages in the form of channels 10 and 10 each formed in the piston 8 on its outer cylindrical surface and extending circumferentially of the piston 8 between the exhaust port 3 and each of the scavenging ports 5. The axial position of the channels 10 in the piston 8 is such that when the piston 8 reaches the top of the cylinder 1 which corresponds to the top dead center of the piston 8, each of the channels 10 and 10 opens into the exhaust port 3 and each scavenging ports 5.

Assuming that the piston 8 is in its top dead center, and the fuel mixture is compressed in the combustion chamber 9, the compressed fuel mixture is ignited by the spark plug ( not shown ) to produce the burning and expanding gases forcing the piston 8 to move downward. During movement of the piston from its top dead center to its bottom dead center, the volume of the combustion chamber 9 increases while the volume of the crank chamber 4 decreases for compression of the fuel mixture therein. The downward movement of the piston 8 causes the exhaust port 3 to open, thereby flowing the burned gas out of the cylinder 1 through the exhaust port 3. Subsequently, the piston 8 uncovers the scavenging ports 5 in the wall of the cylinder 1 so that the compressed fuel mixture (fresh fuel charge ) is charged from the crank chamber 4 through the scavenging ports 5 into the combustion chamber 9 while expelling the burned gases from the combustion chamber into the exhaust port 3. At this point, since both the exhaust port 3 and the scavenging ports 5 open, a portion of the fresh fuel mixture which is introduced from the crank chamber 4 through the scavenging ports 5 into combustion chamber 9 may escape into the exhaust port 3. Hydrocarbons contained in the escaped fresh fuel mixture and the unburned components in the burned gases defines total hydrocarbons in the exhaust gas.

As the piston 8 moves upward past the bottom dead center, it closes the scavenging ports 5 and the exhaust port 3 so that any communication between the combustion chamber 9 and the crank chamber 4 is blocked to stop any escape of the fuel mixture. As the piston 8 continues to move from the its bottom dead center to its top dead center, the piston 8 compresses the fuel mixture in the combustion chamber 9 while creating the vacuum in the crank chamber 4. The upward continuous movement of the piston 8 causes the intake port 2 to open for communication with the crank chamber 4, under the action of vacuum in which the fuel mixture from the carburetor is drawn or aspirated through the intake port 2 into the crank chamber 4. As the piston 8 reaches its top dead center, the exhaust port 3 and the scavenging ports 5 communicate with each other through the channels 10 so that the portion of the burned gases containing the escaped fresh fuel mixture is drawn from the exhaust port 3 through the channels 10 and the scavenging ports 5 into the crank chamber 4 under vacuum created in the crank chamber 4 to reduce the total hydrocarbons in the exhaust gas. The major portion of the burned gases drawn from the exhaust port 3 will remains in the scavenging ports 5.

After the piston 8 has passed through the top dead center, it again moves downward so that the piston 8 closes the intake port 2 and uncovers the exhaust port 3 and the scavenging ports 5 for communication with the combustion chamber 9. Thus, the burned gases remaining in the scavenging ports 5 first flow into the combustion chamber 9 and the fresh fuel mixture is then charged into the combustion chamber 9. Gases which initially escape from the combustion chamber, have a large proportion of the burned gases circulated into the combustion chamber 9 and this results in reduction in the total hydrocarbons in the exhaust gas.

Mixing the high temperature-burned gases with the fresh fuel mixture in the combustion chamber 9 facilitates burning of the fuel mixture and can thus enhance the combustion efficiency. In general, a decrease in charging efficiency of the fuel mixture results in a poor power output, but if an amount of the burned gases to be circulated into the combustion chamber is limited to such an extent that the burning of the fuel mixture is not deteriorated, the combustion efficiency can be improved without lowering the power output and the total hydrocarbons in the exhaust gases can be reduced.

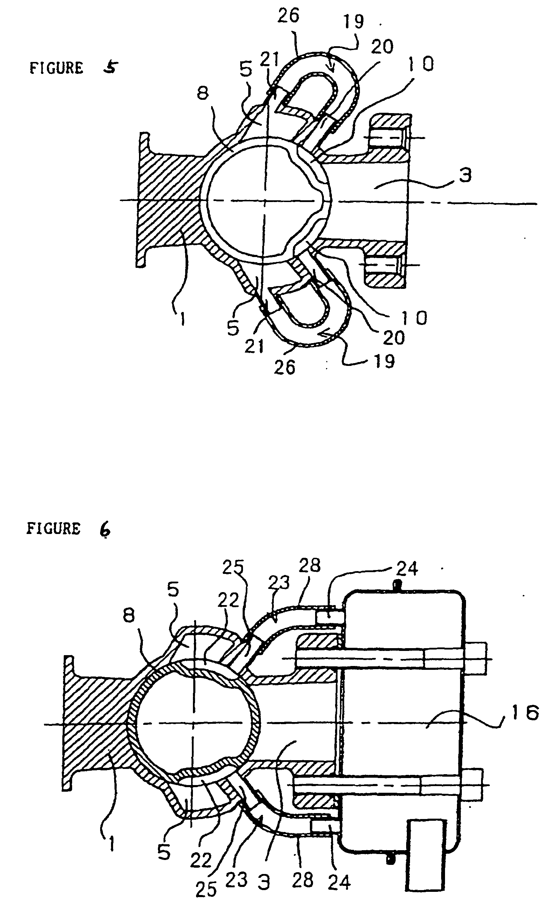

Referring to Figures 4 through 6 illustrating alternative embodiments of the two-stroke cycle engine according to the present invention and which are views similar to Figure 3, similar components are indicated by same reference numerals as in Figures 1 through 3.

In the two-stroke cycle engine illustrated in Figure 4, the passages are in the form of circumferentially extending channels 18 and 17 formed in a piston 8 on its outer cylindrical surface and in the inner wall of the cylinder 1, respectively, and adapted to open into the exhaust port 3 and the scavenging ports 5, respectively. The channels 17 and 18 are dimensioned such that portions of the channels 17 and18 overlap with each other. The axial positions of the channels 17 and 18 are such that when the piston 8 reaches the top of the cylinder 1 which corresponds to the top dead center of the piston 8, the channels 17 and 18 face each other to define continuous channels each opening into the exhaust port 3 and the scavenging port 5.

In the two-stroke cycle engine illustrated in Figure 5, channels 18 similar to those shown in Figure 5, are formed in a piston 8 on its outer cylindrical surface while a cylinder wall are formed with openings 20 and 20 adapted to open into the channels 18. There is provided an opening 21 formed to communicate with each of the scavenging ports 5 and a pipe 26 is connected at its one end to the opening 20 and at its other end to the opening 21. The axial positions of the channels 18 and the openings 20 are such that when the piston 8 reaches the top of the cylinder 1 which corresponds to the top dead center of the piston 8, the channels 18 and the openings 20 face each other to define communication means 19 extending through the pipes 26 between the exhaust port 3 and the scavenging ports 5 and opening into them. As the piston 8 moves to its top dead center, the burned gases in the exhaust port 3 flows through the communication means 19 into the scavenging ports 5.

In a two- stroke cycle engine illustrated in Figure 6, a piston 8 is formed on its outer cylindrical surface with two circumferentially extending channels 22 each adapted to open into the scavenging port 5 while an opening 25 adapted to open into each of the channels 22, is formed in the cylinder wall. A muffler 16 is connected to the exhaust port 3 and provided with openings 24 extending from an inner space in the muffler 16. A pipe 28 is connected between each of the openings 24 and each of the openings 25. The axial positions of the channels 22 and the openings 25 are such that when the piston 8 reaches the top of the cylinder 1 which corresponds to the top dead center of the piston 8, the channels 22 and the openings 25 face each other to define communication means 23 through the pipes 26 and the muffler 16 between the exhaust port 3 and the scavenging ports 5. As the piston 8 moves to its top dead center, the burned gases in the exhaust port 3 flow through the muffler 16, communication means 23 and the channels 22 into the scavenging ports 5.

## Claims

1. A two cycle stroke engine having a crank chamber (4) in a crankcase (14) into which a fuel mixture is supplied through feed means, a combustion chamber (9) in a cylinder (1), scavenging ports (5) in said cylinder for communication between said combustion chamber and said crank chamber, an exhaust port (3) in said cylinder, a piston (8) adapted to increase or decrease the volume of said combustion chamber as it reciprocates in said cylinder to open or close said scavenging ports and said exhaust port, and means (10) for communicating said exhaust port with said crank chamber via said scavenging ports when said piston is in a pre-selected stroke position where said scavenging ports and said exhaust port are closed by said piston; **characterised in that** said communication means comprise passages in the form of channels (10) formed in said piston (8) on its outer surface and extending circumferentially of said piston between said exhaust port and said scavenging ports to establish communication therebetween when said piston reaches its top dead centre position.

2. A two stroke engine as claim in claim 1, **characterised in that** said communication means comprise circumferentially extending channels (18,17) formed in the piston (8) on its outer cylindrical surface and in the inner wall (1) of said cylinder, respectively, and adapted to open into said exhaust port (3), and said scavenging ports (5), respectively, whereby when said piston reaches its top dead centre, said channels face each other to define continuous channels opening into said exhaust port and said scavenging port.

3. A two-stroke cycle engine as claimed in claim 1 or claim 2, **characterised in that** said communication means comprise passages in the form of circumferentially extending channels (10) formed in said piston (8) on its outer cylindrical surface and pipes (26) connected at their one end to said scavenging ports (5) and adapted to open into said channels (10) when said piston reaches its top dead centre.

4. A two-stroke engine as claimed in claim 1, **characterised in that** said exhaust port (3) is connected to a muffler (16) having a space therein, and being communicated through said muffler space with said scavenging ports (5) and hence said crank chamber by said communication means (22).

5. A two-stroke cycle engine as claim in claim 4, **characterised in that** said communication means (23) comprise passages in the form of circumferentially extending channels (22) formed in said piston (8) on its outer surface and adapted to open into said scavenging ports (5) and pipes (28) connected at one end to a muffler (16) which is also connected to said exhaust port (3), the pipes being positioned on said cylinder wall to establish communication between said channels and the inner space of said muffler when said piston reaches its top dead centre.

## Patentansprüche

1. Zweitaktmotor, der eine Kurbelkammer (4) in einem Kurbelgehäuse (14), in die hinein eine Kraftstoffmischung über eine Zuführeinrichtung zugeführt wird, eine Verbrennungskammer (9) in einem Zylinder (1), Spülöffnungen (5) in dem Zylinder für eine Verbindung zwischen der Verbrennungskammer und der Kurbelkammer, eine Auslassöffnung (3) in dem Zylinder, einen Kolben (8), angepasst so, um das Volumen der Verbrennungskammer zu vergrößern oder zu verringern, wenn er sich in dem Zylinder hin- und herbewegt, um die Spülöffnungen und die Auslassöffnung zu öffnen oder zu schließen, und Einrichtungen (10), um die Auslassöffnung mit der Kurbelkammer über die Spülöffnungen in Verbindung zu setzen, wenn sich der Kolben in einer vorab ausgewählten Hubposition befindet, wo die Spülöffnungen und die Auslassöffnung durch den Kolben geschlossen sind, aufweist; **dadurch gekennzeichnet, dass** die Verbindungseinrichtung Durchgangswege in der Form von Kanälen (10), gebildet in dem Kolben (8), auf deren äußerer Oberfläche und sich in Umfangsrichtung des Kolbens zwischen der Auslassöffnung und den Spülöffnungen erstreckend, aufweist, um eine Verbindung dazwischen dann einzurichten, wenn der Kolben seine obere Totpunktmittenposition erreicht.

2. Zweitaktmotor nach Anspruch 1, **dadurch gekennzeichnet, dass** die Verbindungseinrichtung sich in Umfangsrichtung erstreckende Kanäle (18, 17), gebildet in dem Kolben (8) auf seiner äußeren, zylindrischen Oberfläche und in der inneren Wand (1) des Zylinders, jeweils, aufweist, und so angepasst ist, um sich in die Auslassöffnung (3), und die Spülöffnungen (5), jeweils, hinein zu erstrecken, wodurch dann, wenn der Kolben seine obere Totpunktmitte erreicht, die Kanäle zueinander hinweisen, um kontinuierliche Kanäle zu definieren, die sich in die Auslassöffnung und die Spülöffnung hinein erstrecken.

3. Zweitaktmotor nach Anspruch 1 oder Anspruch 2, **dadurch gekennzeichnet, dass** die Verbindungseinrichtung Durchgangswege in der Form von sich in Umfangsrichtung erstreckenden Kanälen (10), gebildet in dem Kolben (8) auf seiner äußeren, zylindrischen Oberfläche, und Rohrleitungen (26), verbunden an deren einem Ende mit den Spülöffnungen (5) und so angepasst, um sich in die Kanäle (10) hinein zu öffnen, wenn der Kolben seine obere Totpunktmitte erreicht, aufweist.

4. Zweitaktmotor nach Anspruch 1, **dadurch gekennzeichnet, dass** die Auslassöffnung (3) mit einem Schalldämpfer (16) verbunden ist, der einen Raum darin besitzt, und die über den Schalldämpferraum mit den Spülöffnungen (5) und demzufolge mit der Kurbelkammer durch die Verbindungseinrichtung (22) in Verbindung gesetzt wird.

5. Zweitaktmotor nach Anspruch 4, **dadurch gekennzeichnet, dass** die Verbindungseinrichtung (23) Durchgangswege in der Form von sich in Umfangsrichtung erstreckenden Kanälen (22), gebildet in dem Kolben (8) auf dessen äußerer Oberfläche und angepasst so, um sich in die Spülöffnungen (5) hinein zu öffnen, und Rohrleitungen (28), verbunden an einem Ende mit dem Schalldämpfer (16), der auch mit der Auslassöffnung (3) verbunden ist, aufweist, wobei die Rohrleitungen an der Zylinderwand so positioniert sind, um eine Verbindung zwischen den Kanälen und dem inneren Raum des Schalldämpfers einzurichten, wenn der Kolben seine obere Totpunktmitte erreicht.

## Revendications

1. Moteur à deux temps comportant une chambre de vilebrequin (4) dans un carter moteur (14) dans lequel un mélange de carburant est fourni par l'intermédiaire d'un moyen d'alimentation, une chambre de combustion (9) dans un cylindre (1), des lumières de balayage (5) dans ledit cylindre en vue d'une communication entre ladite chambre de combustion et ladite chambre de vilebrequin, une lumière d'échappement (3) dans ledit cylindre, un piston (8) conçu pour augmenter ou diminuer le volume de ladite chambre de combustion lorsqu'il va-et-vient dans ledit cylindre pour ouvrir ou fermer lesdites lumières de balayage et ladite lumière d'échappement, et un moyen (10) destiné à faire communiquer ladite lumière d'échappement avec ladite chambre de vilebrequin par l'intermédiaire desdites lumières de balayage lorsque ledit piston est à une position d'un temps présélectionné lorsque lesdites lumières de balayage et ladite lumière d'échappement sont refermées par ledit piston, **caractérisé en ce que** ledit moyen de communication comprend des passages sous forme de canaux (10) constitués dans ledit piston (8) sur sa surface extérieure et s'étendant sur la circonférence dudit piston entre ladite lumière d'échappement et lesdites lumières de balayage pour établir une communication entre celles-ci lorsque ledit piston atteint sa position du point mort haut.

2. Moteur à deux temps selon la revendication 1, **caractérisé en ce que** ledit moyen de communication comprend des canaux s'étendant sur la circonférence (18, 17) formés dans le piston (8) sur sa surface cylindrique extérieure et dans la paroi intérieure (1) dudit cylindre, respectivement, et conçus pour s'ouvrir dans ladite lumière d'échappement (3) et lesdites lumières de balayage (5), respectivement, grâce à quoi, lorsque ledit piston atteint son point mort haut, lesdits canaux sont en face les uns des autres pour définir des canaux continus s'ouvrant dans ladite lumière d'échappement et ladite lumière de balayage.

3. Moteur à deux temps selon la revendication 1 ou la revendication 2, **caractérisé en ce que** ledit moyen de communication comprend des passages sous forme de canaux s'étendant suivant la circonférence (10) formés dans ledit piston (8) sur sa surface cylindrique extérieure et des conduits (26) raccordés à leur première extrémité auxdites lumières de balayage (5) et conçus pour s'ouvrir dans lesdits canaux (10) lorsque ledit piston atteint son point mort haut.

4. Moteur à deux temps selon la revendication 1, **caractérisé en ce que** ladite lumière d'échappement (3) est raccordée à un silencieux (16) comportant un espace dans celui-ci, et mis en communication par l'intermédiaire dudit espace de silencieux avec lesdites lumières de balayage (5) et delà à ladite chambre de vilebrequin grâce auxdits moyens de communication (22).

5. Moteur à deux temps selon la revendication 4, **caractérisé en ce que** ledit moyen de communication (23) comprend des passages sous forme de canaux s'étendant suivant la circonférence (22) formés dans ledit piston (8) sur sa surface extérieure et conçus pour s'ouvrir dans lesdites lumières de balayage (5) et des conduits (28) raccordés à une extrémité à un silencieux (16) qui est également raccordé à ladite lumière d'échappement (3), les conduits étant positionnés sur ladite paroi de cylindre afin d'établir une communication entre lesdits canaux et l'espace intérieur dudit silencieux lorsque ledit piston atteint son point mort haut.
